# EUROPEAN PATENT SPECIFICATION

(11) **EP 1 895 205 B1**
(45) Date of publication and mention of the grant of the patent: **27.06.2012**
(21) Application number: 07253421.7
(22) Date of filing: 30.08.2007
(51) Int. Cl.: F16H 61/662

(54) **Straddle-type vehicle**
Grätschsitz-Fahrzeug
Véhicule de type chariot

(30) Priority: 01.09.2006 JP 2006237745
(43) Date of publication of application: 05.03.2008
(73) Proprietor: Yamaha Hatsudoki Kabushiki Kaisha, Iwata-shi, Shizuoka 438-8501 (JP)
(72) Inventor: Asaoka, Ryousuke, Iwata-shi Shizuoka-ken 438-8501 (JP)
(74) Representative: Moreland, David

(56) References cited:
- EP-A2- 0 111 891
- EP-A2- 0 127 082
- US-A- 4 261 229
- US-A- 4 559 850
- US-A1- 2006 030 452

## Description

### FIELD OF THE INVENTION

The present invention relates to straddle-type vehicles, and in particular, to a straddle-type vehicle equipped with an electronically controlled belt-type continuously variable transmission.

### BACKGROUND TO THE INVENTION

Straddle-type vehicles such as motor scooters widely employ V-belt type continuously variable transmissions. The V-belt type continuously variable transmission comprises a pair of primary and secondary sheaves with a variable groove width. The primary sheave is disposed on a primary shaft to which the output of a power source, such as an engine, is input. The secondary sheave is disposed on a secondary shaft that extracts the output to a driving wheel. A V-belt is wound around the sheaves. The winding diameters of the V-belt around the sheaves are controlled by changing the groove widths by a groove-width adjusting mechanism so that the speed change ratio of the sheaves can be controlled steplessly.

The primary sheave and the secondary sheave are each generally composed of a fixed flange and a moving flange which have a V-groove therebetween. The moving flanges are movable along the axis of the primary shaft or the secondary shaft.

The speed change ratio can be controlled steplessly by moving the moving flanges by the groove-width adjusting mechanism.

Some known types of V-belt type continuously variable transmission move the moving flange of the primary sheave for groove-width adjustment by an electric motor. This type can flexibly adjust the groove width because the moving flange can be moved in either the direction to decrease the groove width of the primary sheave (to Top) or the direction to increase the groove width (to Low) by the output (moving thrust) of the electric motor. Such an arrangement is disclosed in, for example, JP-A-04-210156. The output of the electric motor is controlled by power supplied from a control unit. The supply power is determined from the deviation of the actual position of the moving flange from a target position. Some V-belt type continuously variable transmissions control the supply power by a pulse-width modulation (PWM) signal. Such an arrangement is disclosed in, for example, JP-A-09-105456. Other examples of prior art in this field include JP-A-60-222648.

Another example of a continuously variable transmission is given in EP0111891, which discloses the features of the preamble of claim 1. This document describes a continuously variable transmission mechanism of the v-belt type having a hydraulic control system, wherein a shift control unit of the transmission comprises a timer. The timer value is set to a predetermined value T, for an upshift operation and set to a predetermined value T₂ for a downshift operation, wherein the predetermined time T₂ for downshift is smaller than the predetermined time T₁ for upshift. In effecting an upshift, the stepper motor is rotated by one unit each time after elapse of a timer value T₁, i.e. the rotational speed of the stepper motor is proportional to 1/T₁. In effecting downshifting, the stepper motor is rotated by one unit each time after elapse of the timer value T₂. Since T₁ is greater than T₂, the rotational speed of the stepper motor during downshifting is faster than the rotational speed of the stepper motor during upshifting.

A further example of a continuously variable transmission is described in EP0127082. This document describes a control device for a continuously variable transmission system in which a deviation of an actual transmission ratio from a desired transmission ratio is computed. A proportional term and an integral term are given different values for downshifting and upshifting so as to provide a quick response in downshifting and a gradual response for upshifting. The deviation is obtained by subtracting the actual transmission ratio from the desired transmission ratio. It is then determined whether the deviation is positive or negative. If downshifting is required, i.e. the deviation is positive, then a proportional gain Kp is given a value Kp1 and a differential gain Kd is given a value Kd1. Whereas if the deviation is negative, i.e. an upshifting is required, then the proportional gain Kp is given a value Kp2 and a differential gain Kd is given the value Kd2. The values Kp2 and Kd2 are smaller than Kp1 and Kd1 respectively, so that upshifting is slower than downshifting.

US4559850 describes a continuously variable automatic transmission for a motor vehicle that includes a V-belt type stepless transmission mechanism having input and output pulleys mounted respectively on input and output shafts, each pulley being provided with a hydraulic servo for varying the effective diameter thereof, and a V-belt linking the input and output pulleys to transmit power therebetween. The hydraulic control system includes a primary regulator valve for generating a primary line pressure by regulating pressurized oil from a pressure source responsive to vehicle speed and/or throttle opening, and a secondary regulator valve for generating a secondary line pressure at a lower level than said primary line pressure by regulating pressurized oil from a pressure source responsive to vehicle speed and/or throttle opening.

The inventor has worked toward the development of an electronic belt-type continuously variable transmission that controls speed change ratio electronically, and has found that the movement of the moving flange of the primary sheave sometimes delays in response when vehicles are started from a Low mode transmission ratio. The response delay at the Low start mode is caused by a shortage of thrust necessary for moving the moving flange due to a shortage of the output of the electric motor. To solve the problem, an increase in the output of the electric motor is required so as to allow the response delay at the Low start mode.

However, increasing the output of the electric motor at the Low start mode causes another problem of overshooting from a target moving flange position during upshifting and downshifting movement

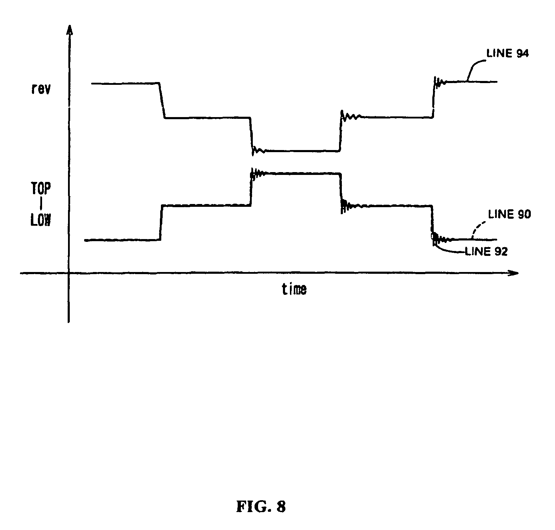

Referring to Fig. 8, the problem of overshooting which occurs when the output of the electric motor is increased will be described. Fig. 8 is a schematic diagram of the fluctuations of the moving flange position when the output of the electric motor is controlled to Low start. Line 90 indicates a set target moving flange position, line 92 indicates an actual moving flange position, and line 94 indicates engine speed. The horizontal axis indicates time. This shows that the closer lines 90 and 92 are to each other, the more smoothly the moving flange reaches the target flange position.

The line 90 and the line 92 agree with each other in Low during upshift. That is, the response delay of the moving flange at the Low start mode has been improved. However, in the region shifted to Top, a so-called overshooting phenomenon occurred in which the line 92 fluctuates. That is, the moving flange overshoots the target moving flange position and returns to reach the target moving flange position. During downshift, overshooting occurs across almost the whole region, in which the line 92 fluctuates significantly, lacking stability.

Such an overshooting phenomenon causes a so-called hunting phenomenon as indicated by line 94 in which the fluctuation of the engine speed is repeated, resulting in a significantly uncomfortable ride.

The present invention is made in consideration of the above problems. Accordingly, a principal object of the invention is to provide a continuously variable transmission in which response delay and hunting due to overshooting can be reduced.

### SUMMARY OF THE INVENTION

According to the present invention there is provided a variable transmission comprising:
a primary sheave rotatably coupled to a secondary sheave via an endless belt, wherein the primary sheave comprises a fixed flange and a moving flange defining a belt groove therebetween for accommodating the endless belt;
a control unit;
an actuator connected to the control unit and adapted to adjust the groove width of the primary sheave by controlling the movement of the moving flange of the primary sheave; and
a sheave-position sensor connected to the control unit and adapted to sense the position of the moving flange of the primary sheave;
wherein the control unit is adapted to control the power output of the actuator in such a manner as to change the power output of the actuator according to the moving flange position sensed by the sheave-position sensor.

The output of the actuator may be larger in Low than in Top.

The output of the actuator may increase when the groove width between the fixed and moving sheaves of the primary sheave increases.

The output of the actuator may be largest when the groove width between the fixed and moving sheaves of the primary sheave is largest.

The control unit may be connected to a storage unit. The storage unit may store specified relative moduli corresponding to the moving flange positions of the primary sheave. The output of the actuator may be controlled according to an actuator manipulation amount calculated by multiplying a command value to the actuator by the relative modulus.

The actuator may comprise an electric motor, and the output of the electric motor may be controlled by the electric power supplied to the electric motor.

The electric power supplied to the electric motor may be controlled by the duty ratio of the pulse signal output from the control unit.

The secondary sheave may comprise a fixed flange and a moving flange defining a belt groove therebetween for accommodating the endless belt. The moving flange of the secondary sheave may be biased in a direction to narrow the groove width.

According to a second aspect of the present invention, there is provided a continuously variable transmission electronically controlled by a control unit. The continuously variable transmission is a belt type continuously variable transmission comprising a primary sheave and a secondary sheave each having a V-groove and a belt wound around the V-grooves of the sheaves, wherein the groove widths of the sheaves are varied so as to control the speed change ratio steplessly. The primary sheave and the secondary sheave each have a fixed flange and a moving flange each mounted on a rotation shaft. The groove width of the primary sheave is adjusted by controlling the movement of the moving flange of the primary sheave by an actuator. The moving flange of the secondary sheave is biased in the direction to narrow the groove width by a groove-width adjusting mechanism. The actuator is connected to the control unit. The control unit controls the output of the actuator in such a manner as to change the output of the actuator between for upshift and downshift of the continuously variable transmission.

In one embodiment, the output of the actuator is larger for upshift than for downshift.

According to a third aspect of the present invention, there is provided a continuously variable transmission electronically controlled by a control unit. The continuously variable transmission is a belt type continuously variable transmission comprising a primary sheave and a secondary sheave each having a V-groove and a belt wound around the V-grooves of the sheaves. The groove widths of the sheaves are varied so as to control the speed change ratio steplessly. The primary sheave and the secondary sheave each have a fixed flange and a moving flange each mounted on a rotation shaft. The groove width of the primary sheave is adjusted by controlling the movement of the moving flange of the primary sheave by an actuator. The moving flange of the secondary sheave is biased in the direction to narrow the groove width. The actuator is connected to the control unit. The control unit is connected to a sheave-position sensor that senses the position of the moving flange of the primary sheave. The control unit controls the output of the actuator in such a manner as to change the output of the actuator according to the moving flange position sensed by the sheave-position sensor.

In one embodiment, the output of the actuator is larger in Low than in Top.

In one embodiment, the control unit is connected to a storage unit, wherein the storage unit stores specified relative moduli corresponding to the moving flange positions of the primary sheave; and the output of the actuator is controlled according to an actuator manipulation amount calculated by multiplying a command value to the actuator by the relative modulus.

In one embodiment, the actuator is an electric motor; and the output of the electric motor is controlled by the electric power supplied to the electric motor.

In one embodiment, the electric power supplied to the electric motor is controlled by the duty ratio of the pulse signal output from the control unit.

According to a fourth aspect of the present invention, there is provided a straddle-type vehicle comprising a continuously variable transmission according to any one of the first to fourth aspects.

With the continuously variable transmission of the invention, the control unit connected to the actuator for moving the moving flange of the primary sheave controls the output of the actuator so as to change between for upshift and downshift of the continuously variable transmission. This allows the output of the actuator to be controlled to an appropriate magnitude, thereby enabling the moving flange to be moved by appropriate power. Therefore, response delay and hunting due to overshooting can be prevented.

With the continuously variable transmission of the invention, the control unit connected to the actuator for moving the moving flange of the primary sheave controls the output of the actuator as to vary according to the moving flange position sensed by the sheave position sensor. This allows the output of the actuator to be controlled to an appropriate magnitude, thereby enabling the moving flange to be moved by appropriate power. Therefore, response delay and hunting due to overshooting can be prevented.

### BRIEF DESCRIPTION OF THE DRAWINGS

These and other aspects of the present invention will now be described, by way of example only, with reference to the accompanying drawings, in which:
Fig. 1 is a block diagram showing the structure of a continuously variable transmission according to an embodiment of the present invention;
Fig. 2(a) is a graph of the measurements of the moving time of a moving flange of the transmission shown in Fig. 1 during upshifting motion;
Fig. 2(b) is a graph of the measurements of the moving time of the moving flange of the transmission shown in Fig. 1 during downshifting motion;
Fig. 3 shows changes in percentage when the moving flange position is varied between Low and Top;
Fig. 4 is a block diagram showing a method for controlling a control unit of the transmission shown in Fig. 1;
Fig. 5 is a side view of a vehicle equipped with the continuously variable transmission shown in Fig. 1;
Fig. 6 is a flowchart for the control of the control unit of the transmission shown in Fig. 1;
Fig. 7 is a schematic diagram of variations of the moving flange position when the continuously variable transmission shown in Fig. 1 is in use; and
Fig. 8 is a schematic diagram of variations of the moving flange position when the output of an electric motor is controlled to Low start.

### DETAILED DESCRIPTION OF THE DRAWINGS

Before a detailed description of an embodiment of the invention is provided with reference to the drawings, it should be noted that the inventor has worked toward the development of electronic belt-type continuously variable transmissions, and has found that the response of the moving flange of the primary sheave is sometimes delayed or overshooting occurs. One of the causes of such response delay and overshooting may be excess or deficiency of the output of an electric motor for moving the moving flange. However, the cause of the excess or deficiency of the output of the electric motor has been unknown.

Accordingly, the inventor has tried to find the cause of the excess or deficiency of the output of the electric motor, and has found a mechanism capable of reducing the response delay and overshooting and reached the invention.

Referring to the accompanying drawings, an embodiment of the invention will be described, wherein like reference numerals designate like or corresponding components throughout. It is to be understood that the invention is not limited to the following embodiment.

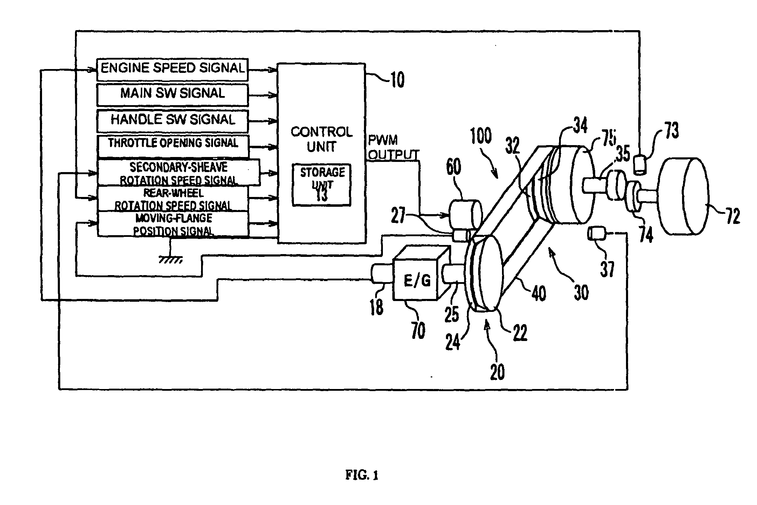

Referring initially to Fig. 1, the structure of a continuously variable transmission 100 according to an embodiment of the invention will be described. Fig. 1 is a block diagram showing the structure of the continuously variable transmission 100.

The continuously variable transmission 100 of this embodiment is electronically controlled by a control unit 10. A belt 40 is wound around the V-grooves of a primary sheave 20 and a secondary sheave 30. The speed change ratio is controlled steplessly by changing the groove widths of the sheaves.

The primary sheave 20 and the secondary sheave 30 comprise fixed flanges 22 and 32 and moving flanges 24 and 34 attached to rotation shafts 25 and 35, respectively. The moving flanges 24 and 34 are movable along the rotation shafts 25 and 35, respectively. The fixed flanges are also referred to as fixed sheaves, and the moving flanges are also referred to as moving sheaves.

The moving flange 34 of the secondary sheave 30 is biased by a groove-width adjusting mechanism in the direction to decrease the groove width. The groove-width adjusting mechanism of this embodiment has a spring (not shown) attached to the moving flange 34 and a torque cam (not shown) provided at part of the moving flange 34.

The groove width of the primary sheave 20 is adjusted by controlling the movement of the moving flange 24 of the primary sheave 20 with an actuator 60 (by sliding the moving flange 24 along the rotation shaft 25). The moving flange 24 can be moved by the output of the actuator 60 either in the direction to narrow the groove width of the primary sheave 20 (to Top) or in the direction to extend the groove width (to Low), allowing flexible adjustment of the groove width.

The actuator 60 of this embodiment is an electric motor. The output of the electric motor 60 is controlled by the electric power supplied to the electric motor 60. In other words, the electric motor 60 converts the electric energy of the input power to mechanical energy, and outputs it to the moving flange 24 to move the moving flange 24.

The power to be supplied to the electric motor 60 is controlled using a pulse width modulation (PWM) technique. In this PWM technique, the output of the electric motor 60 is controlled by varying the time proportion of the ON/OFF (duty ratio) of the electric motor 60 while the voltage of the supply power is fixed.

While in this embodiment the output of the electric motor 60 is controlled by the PWM technique, it may not necessarily be controlled by the PWM technique but also be controlled with the voltage of supply power varied in an analog manner. Examples of the actuator 60 are, in addition to the electric motor, a stepping or stepper motor, a linear motor, a solenoid, a hydraulic system, and a pneumatic system.

The actuator 60 for adjusting the groove width of the primary sheave 20 is electrically connected to the control unit (transmission control unit) 10. The control unit 10 is an electronic control unit (ECU). The electronic control unit (ECU) is, e.g., a microprocessing unit (MPU).

The control unit 10 is configured to control the output of the actuator 60 so as to change between an upshift output and a downshift output. Specifically, the control unit 10 controls the output of the actuator 60 so that when the sheave slide resistance differs between upshift motion and downshift motion, it can control the output according to the sheave slide resistance. The "sheave slide resistance" denotes load resistance applied when the moving flange 24 of the primary sheave 20 is moved.

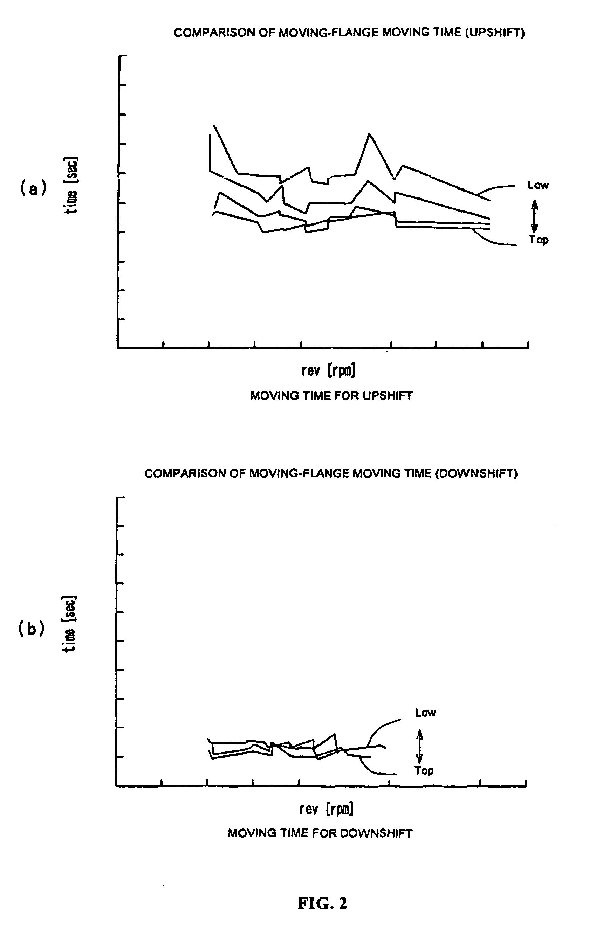

The difference in sheave slide resistance between upshift motion and downshift motion will now be described. The inventor tracked the cause of the excess or deficiency of the output of the actuator 60, and has found that the sheave slide resistance has an influence on the movement of the moving flange 24. In other words, the measurement of the moving time of the moving flange 24 of the primary sheave 20 shows that there is a significant difference in the moving time of the moving flange 24 between upshift motion and downshift motion, as shown in Figs. 2(a) and 2(b). Both the output of the actuator 60 and the stroke of the moving flange 24 at the measurement are fixed.

Fig. 2(a) shows measurements for upshift motion, and Fig. 2(b) shows measurements for downshift motion, wherein the vertical axis indicates moving time, and the horizontal axis indicates engine speed. Here, the longer the moving time of the moving flange 24, the lower the moving speed of the moving flange 24 becomes, at the same engine speed, which indicates that the sheave slide resistance is high.

As can be seen from the comparison between Fig. 2(a) and Fig. 2(b), the moving time is generally shorter during downshift than during upshift. Therefore, the sheave slide resistance at downshift is considerably lower than that at upshift. In other words, the sheave slide resistance at upshift is higher than that at downshift.

The control unit 10 of this embodiment controls the output of the actuator 60 according to the difference in sheave slide resistance, as shown in Figs. 2(a) and 2(b), that is, the respective sheave slide resistances. More specifically, in the example of Fig. 2, since the sheave slide resistance is higher at upshift than at downshift, the output of the actuator 60 is controlled by the control unit 10 so as to be higher for upshift than for downshift.

With the continuously variable transmission 100 of this embodiment, the control unit 10 can control the output of the actuator 60 so as to change for upshift and downshift motion. In other words, the output of the actuator 60 can be controlled according to the sheave slide resistance at upshift and at downshift by the control unit 10. This allows the output of the actuator 60 to be controlled to an appropriate magnitude, which enables the moving flange 24 of the primary sheave 20 to be moved with appropriate power, thereby reducing response delay and hunting due to overshooting.

Typical continuously variable transmissions control the output of the actuator 60 according to the deviation of an actual moving flange position from a target moving flange position (the stroke of the moving flange 24). Accordingly, at the same stroke of the moving flange 24, the output of the actuator 60 is constant irrespective of whether upshift or downshift motion is taking place. Therefore, the output of the actuator 60 sometimes becomes too much or too little according to a difference in sheave slide resistance.

In contrast, the continuously variable transmission 100 of this embodiment can control the output of the actuator 60 according to the sheave slide resistance, causing no excess or deficiency of the output of the actuator 60. Therefore, the moving flange 24 can be given appropriate power.

The moving flange 24 of the primary sheave 20 is moved in opposite directions during upshift and at downshift motion (in the direction to narrow the groove width of the primary sheave 20 and in the direction to extend it). Here the output of the actuator 60 denotes the absolute value irrespective of whether the moving direction of the moving flange 24 is positive or negative.

The control unit 10 controls the output of the actuator 60 according to the difference in sheave slide resistance during upshift and downshift motion, as described above. The control unit 10 may also control the output of the actuator 60 according to the moving flange position between Low and Top when the sheave slide resistance differs according to the moving flange position between Low and Top.

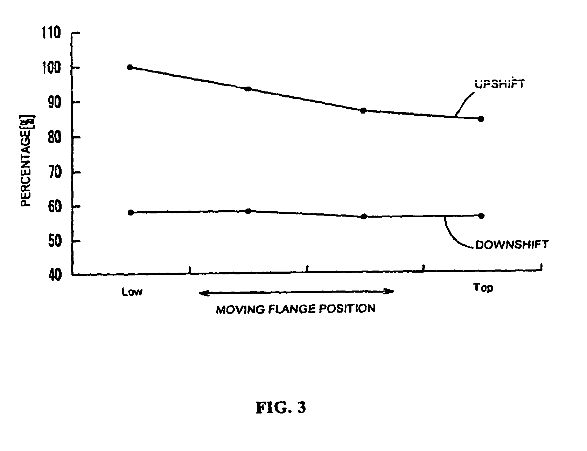

The case in which the sheave slide resistance differs depending on the moving flange position between Low and Top will now be specifically described. Fig. 3 shows changes in percentage (relative modulus) when the moving flange position is varied between Low and Top. The horizontal axis indicates the moving flange position and the vertical axis indicates the percentage. The percentage indicates the relative moving time of the moving flange 24. Therefore, the higher the percentage, the longer the moving time of the moving flange 24 is and as such, the higher the sheave slide resistance is.

The percentage for upshift is higher in Low than in Top, that is, the sheave slide resistance is higher in Low than in Top.

In contrast, the percentage changes little between Low and Top at downshift, that is, the sheave slide resistance changes little with the moving flange position.

The control unit 10 of this embodiment controls the output of the actuator 60 according to the difference in sheave slide resistance, as shown in Fig. 3, that is, according to the sheave slide resistance at the moving flange position. Specifically speaking, since the sheave slide resistance is higher in Low than in Top at upshift, the output of the actuator 60 is controlled so as to be higher in Low than in Top.

Thus, the output of the actuator can also be controlled to appropriate power according to the moving flange position. This further reduces response delay and hunting due to overshooting.

In this embodiment, the percentage decreases (i.e., from highest to lowest) in order of Low at upshift, Top at upshift, Low at downshift, and Top at downshift, and thus the sheave slide resistance of the moving flange 24 also decreases in that order. Therefore, the control unit 10 controls the output of the actuator 60 to decrease in that order. That is, the output of the actuator 60 is highest at the Low at upshift condition and is lowest at the Top at downshift condition.

The percentage at downshift does not significantly change even if the moving flange position fluctuates, causing little difference in sheave slide resistance. In this case, there is no need to change the output of the actuator 60 with the moving flange position, allowing the output of the actuator 60 to be fixed.

The control unit 10 of this embodiment can change the output of the actuator 60 on the basis of information on whether the gear change is shifted to higher gear or to lower gear and information on the moving flange position between Low and Top. Alternatively, the control unit 10 may change the output of the actuator 60 according to information relating only to one gear change direction. For example, the control unit 10 may change the output of the actuator 60 according to only the information on the moving flange position between Low and Top.

The percentages shown in Fig. 3 are calculated by the moving time of the moving flange 24 shown in Figs. 2(a) and 2(b). Specifically speaking, the percentages are calculated in such a manner that moving times at the engine speed in every moving flange position are averaged, of which the longest moving time is used as the reference (100). In the example of Fig. 2, (a) the mean moving time in Low during upshift is the longest, and thus the percentage is determined with reference to this moving flange position.

The sheave slide resistance depends on the sliding mechanism characteristic of the continuously variable transmission. Specifically, the sheave slide resistance changes with the pushing power of the groove-width adjusting mechanism of the secondary sheave 30 to the belt 40 (secondary sheave thrust) and the reaction of the belt 40 when the moving flange 24 pushes the belt 40. Accordingly, at which of upshift and downshift the output of the actuator 60 is to be increased can be varied as appropriate according to the sheave slide resistance. Similarly, also when the output of the actuator 60 is varied with the moving flange position, the output of the actuator 60 can be varied as appropriate according to the sheave slide resistance.

Referring back to Fig. 1, the structure of the control unit 10 of this embodiment will be described in detail. The control unit 10 connects to a sheave position sensor 27 that determines the position of the moving flange 24 of the primary sheave 20. The sheave position sensor 27 can output information on the moving flange position (a moving-flange position signal) to the control unit 10. The control unit 10 controls the electric motor 60 according to the information on the flange position (the moving-flange position signal).

The control unit 10 also connects electrically to a rear-wheel rotation speed sensor 73 for sensing the rotation speed of a rear wheel 72. The rear-wheel rotation speed sensor 73 is disposed close to the rear wheel 72, and outputs a rear-wheel rotation speed signal to the control unit 10. The vehicle speed can be determined from the rear-wheel rotation speed signal.

The control unit 10 also connects electrically to an engine speed sensor 18 for sensing the rotation speed of an engine 70 and a secondary-sheave rotation speed sensor 37 for sensing the rotation speed of the secondary sheave 30, which output an engine speed signal and a secondary-sheave rotation speed signal to the control unit 10, respectively. To the control unit 10, a throttle opening signal, a handle switch signal, and so on can be input.

The control unit 10 also connects to a storage unit 13 in which predetermined relative moduli corresponding to the moving flange positions of the primary sheave 20 are stored. The predetermined relative moduli may be stored in a modulus mat form produced in advance according to the moving flange positions, or alternatively, may be stored as a mathematical expression for calculating a relative modulus corresponding to the moving flange position. With the structure of this embodiment, the storage unit 13 is mounted in the control unit 10. The storage unit 13 may be a semiconductor memory (a RAM, a flash memory, etc.) or a hard disk.

The control unit 10 controls the actual speed change ratio of the vehicle by executing a normal transmission control, by which the electric motor 60 is driven to adjust the position of the moving flange 24 of the primary sheave 20 so as to achieve a target speed change ratio.

Here, the normal transmission control is a control whereby a speed change ratio according to vehicle drive conditions (vehicle speed and throttle opening, etc.) is calculated from a stored map, and a gear change instruction for achieving the speed change ratio is given to the continuously variable transmission 100 to finally achieve the speed change ratio. The normal transmission control is configured to achieve smooth acceleration and deceleration by decreasing the speed change ratio as the vehicle speed and throttle opening are increased (controlled to Top), and increasing the speed change ratio as the vehicle speed and throttle opening are decreased (controlled to Low).

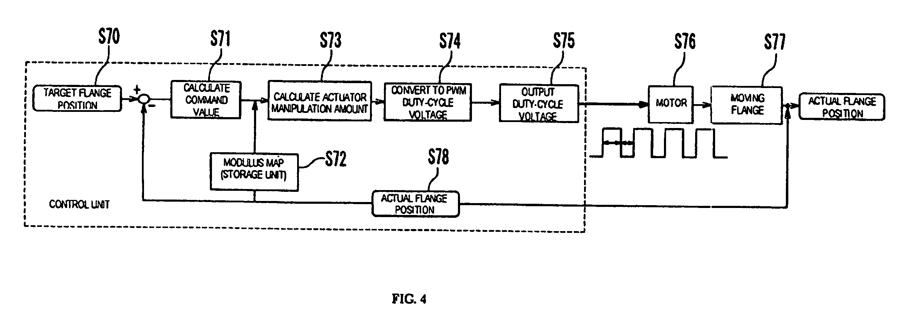

Referring also to Fig. 4, a method for controlling the control unit 10 will be described. Fig. 4 is a block diagram showing a method for controlling the control unit 10.

The control unit 10 is for general control of the engine 70 and the continuously variable transmission 100 according to the above-described signals. Specifically, the control unit 10 calculates the vehicle speed and acceleration from the throttle opening signal, the secondary-sheave rotation speed signal, the rear-wheel rotation speed signal, the sheave position signal, etc. to determine a target speed change ratio. Then, the control unit 10 calculates the position of the moving flange 24 of the primary sheave 20 (target flange position) so as to achieve the target speed change ratio (S70).

The control unit 10 then detects an actual moving flange position (an actual flange position) by the sheave position sensor 27 (S78), and calculates a command value to the electric motor 60 from the deviation of the actual flange position from the target flange position (S71). The "command value" to the electric motor 60 is the amount of control over the electric motor 60 which is determined from the deviation of the actual flange position from the target flange position. In this embodiment, the command value to the electric motor 60 is set such that the direction to narrow the groove width of the primary sheave 20, that is, the direction to move the moving flange 24 during upshift is positive, and the direction to extend the groove width of the primary sheave 20, that is, the direction to move the moving flange 24 during downshift is negative.

Subsequently, the control unit 10 reads a relative modulus corresponding to the actual flange position sensed by the sheave position sensor 27 from the modulus map stored in the storage unit (S72), and calculates the manipulation amount of the actuator by multiplying the command value to the electric motor 60 by the relative modulus (S73). The actuator manipulation amount is obtained by processing (converting) the command value to the electric motor 60 in consideration of the sheave slide resistance at the actual flange position.

The actuator manipulation amount processed (converted) by multiplication of the relative modulus is then converted to power to be supplied to the electric motor 60 (S74). In this embodiment, the supply power is controlled using PWM. Therefore, the actuator manipulation amount is converted to PWM duty-cycle voltage Then the converted duty-cycle voltage is output to the electric motor 60 (S75).

The electric motor 60 converts the electric energy of the input PWM duty-cycle voltage to mechanical energy (S76), provides the mechanical energy to the moving flange 24 to move the moving flange 24 to the target flange position (S77).

While the embodiment reads the relative modulus from the information on the actual flange position sensed by the sheave position sensor 27 in S72, the information for reading the relative modulus is not limited to the actual flange position; for example, the relative modulus can be read also from the information on the target flange position calculated in S70.

In this embodiment, the relative moduli on the modulus map stored in the storage unit 13 are of the moving time of the moving flange 24 shown in Fig. 3. The embodiment controls the output of the electric motor 60 by using a value obtained by multiplying the command value determined from the deviation of the actual flange position from the target flange position by the relative modulus as the final actuator manipulation amount.

While the relative moduli of this embodiment are set in consideration of the measurements shown in Fig. 3, they may be set from simulation.

In the example of Fig. 3, the relative moduli are calculated with the longest of the mean moving time at the moving flange positions as the reference (100). However, the relative moduli may be calculated with reference to any of the moving flange positions between Low and Top, because the relative moduli indicate the relative moving time (and the heave slide resistance). For example, the relative moduli may be calculated with reference to the moving flange position of the shortest moving time (in Fig. 3, in Top at downshift).

The relative moduli of this embodiment are stored in map form in the storage unit 13. Specifically, the storage unit 13 stores two modulus maps, an upshift modulus map and a downshift modulus map. The maps describe relative moduli corresponding to moving flange positions shown in Fig. 3, for example. The entries of relative moduli in map form allows the control unit 10 not only to read a relative modulus corresponding to the actual flange position from the modulus maps but also to achieve fast processing.

Although the storage unit 13 of this embodiment stores relative moduli in map form, it may store them in different form; for example, in a mathematical expression. For the mathematical expression, a relative modulus for an actual flange position can be calculated by substituting the information on the actual flange position into the mathematical expression. The mathematical expression for calculating the relative modulus can be obtained from the graph of changes in relative modulus when the moving flange position is changed, shown in Fig. 3. For example, the mathematical expression for upshift can be expressed by the simple equation (y = *a*x + *b*, where *a* is the slope of the graph).

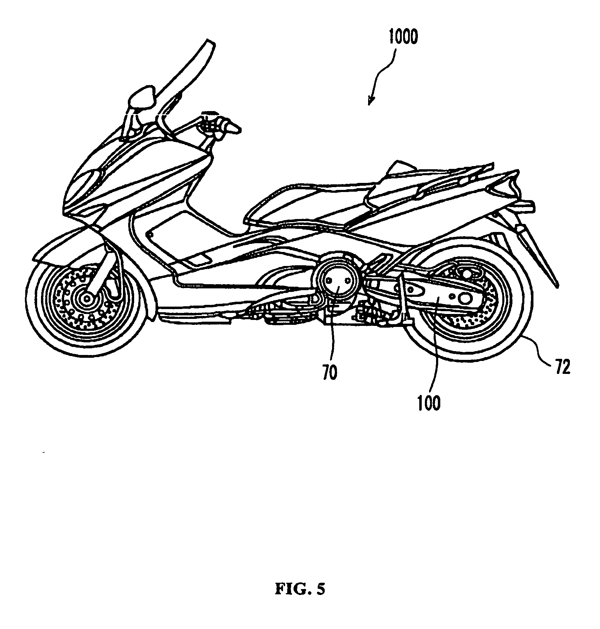

Fig. 5 shows an example of a vehicle equipped with the continuously variable transmission 100 of this embodiment. The vehicle, denoted at 1000, includes the driving source 70, the continuously variable transmission 100 connected to the driving source 70, and the control unit 10 (not identified in Fig. 5) for electronically controlling the continuously variable transmission 100. In this example, the vehicle 1000 is a straddle-type vehicle, or a motor scooter. The driving source 70 of this embodiment is an engine. The output of the engine 70 is controlled according to an accelerator operation member operated by the rider. When the vehicle is of a scooter type, the accelerator operation member is a throttle grip mounted on the handle.

The primary sheave 20 in the continuously variable transmission 100 is connected to the engine 70, and the secondary sheave 30 is connected to the rear wheel 72 via a final reduction mechanism 74. The driving force of the engine 70 output according to throttling is converted to the rotational power of the belt 40 by the primary sheave 20, which is transferred to the rear wheel 72 via the secondary sheave 30 to drive the rear wheel 72.

While the embodiment has been described using a straddle-type vehicle as an example, it should be understood that any vehicles equipped with the continuously variable transmission 100 can reduce response delay and overshooting. Thus, vehicles that can incorporate the continuously variable transmission 100 are not limited to straddle-type vehicles. For example, the continuously variable transmission 100 may be mounted on side-by-side vehicles (SSVs) having a tandem seat.

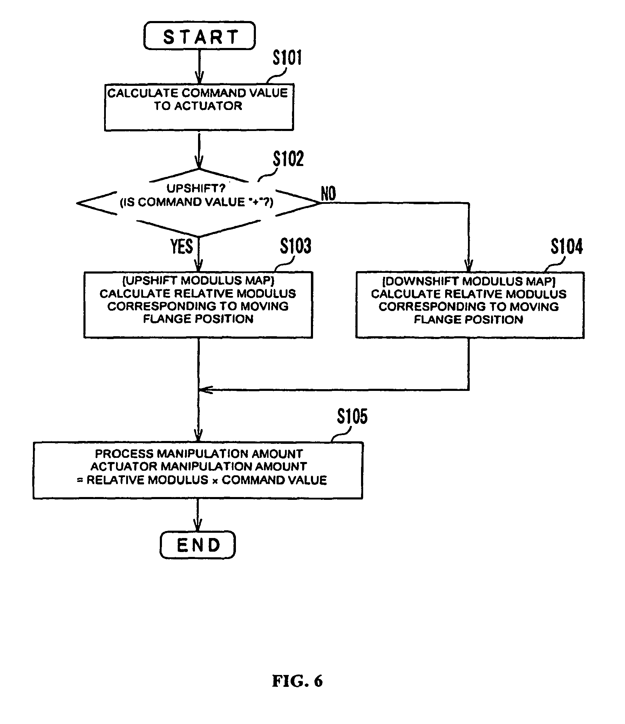

Referring to the flowchart of Fig. 6, the control flow of the control unit 10 will be described. In step S101, the control unit 10 finds a target speed change ratio from the present vehicle speed, engine speed, or accelerator opening, calculates the position of the moving flange 24 of the primary sheave 20 for achieving the target speed change ratio (target flange position) to calculate a command value to the electric motor 60. The target speed change ratio may either be fixed which is changed by a specific value from the present speed change ratio or be changed gradually with the present vehicle speed, engine speed, or accelerator opening.

Next, the control unit 10 determines whether the gear change to the target speed change ratio is upshift or not (step S102). The determination whether the gear change is upshift is made depending on whether the command value to the electric motor 60 is positive or negative. When the gear change is upshift (the command value is positive), the control unit 10 reads a relative modulus corresponding to the actual flange position sensed by the sheave position sensor 27 from the information on the actual flange position and the upshift modulus map stored in the storage unit (S103). When the relative moduli are stored in the storage unit in the form of mathematical expression, the control unit 10 calculates a relative modulus corresponding to the actual flange position.

In contrast, when the gear change is downshift (the command value is negative), the control unit 10 reads a relative modulus corresponding to the actual flange position from the information on the actual flange position and the downshift modulus map stored in the storage unit (S104). When the relative moduli are stored in the form of mathematical expression, the control unit 10 calculates a relative modulus corresponding to the actual flange position.

Finally, the control unit 10 multiplies the command value to the electric motor 60 calculated in step S101 by the relative modulus corresponding to the actual flange position to calculate the manipulation amount of the actuator (step S105).

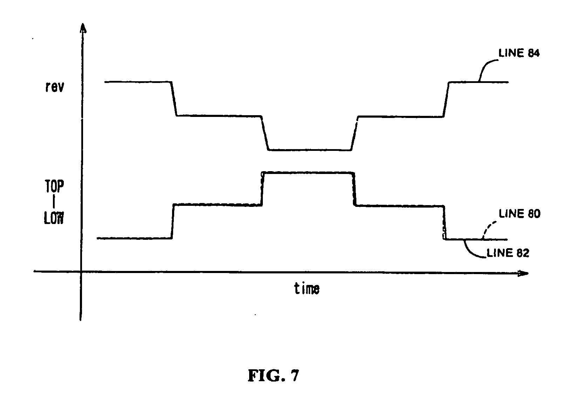

Fig. 7 is a schematic diagram of variations of the moving flange position and so on when the continuously variable transmission 100 of this embodiment is used. Line 80 indicates a set target flange position, line 82 indicates an actual flange position, and line 84 indicates engine speed. The horizontal axis indicates time. This diagram shows that the closer the line 80 and the line 82, the more smoothly the moving flange reaches the target flange position.

With the continuously variable transmission 100 of this embodiment, the line 80 and the line 82 agrees remarkably to each other; particularly in Top during upshift and during downshift, the up-down disorder of the lines shown in Fig. 8 can be eliminated. More specifically, when the output of the electric motor is controlled to Low start, the actual flange position of line 92 of Fig. 8 fluctuates during downshift without stability. In contrast, the actual flange position of the line 82 shown in Fig. 7 is stable both during upshift and downshift. Thus, the continuously variable transmission 100 can avoid overshooting, as indicated by the difference between the traces of the two lines 82 and 92. The engine speed indicated by line 94 of Fig. 8 also falls disorder to repeat fluctuation, or generates so-called hunting. In contrast, in the embodiment shown in Fig. 7, the engine speed indicated by line 84 changes with stability. Thus, the continuously variable transmission 100 can also avoid engine hunting, as indicated by the difference between the traces of the two lines 84 and 94.

While the invention has been described in its preferred embodiment, it is to be understood that such descriptions are not limitations, and that various modifications can be made.

The present invention can provide a continuously variable transmission in which response delay and hunting due to overshooting can be reduced.

### Description of Reference Numerals and Signs

- 10:: control unit
- 13:: storage unit
- 18:: engine speed sensor
- 20:: primary sheave
- 22:: fixed flange
- 24:: moving flange
- 25:: rotation shaft
- 27:: sheave position sensor
- 30:: secondary sheave
- 32:: fixed flange
- 34:: moving flange
- 35:: rotation shaft
- 37:: secondary-sheave rotation speed sensor
- 40:: belt
- 60:: actuator (electric motor)
- 70:: driving source (engine)
- 72:: rear wheel
- 73:: rear-wheel rotation speed sensor
- 74:: final reduction mechanism
- 100:: continuously variable transmission
- 1000:: vehicle

## Claims

1. A continuously variable transmission (100) comprising:
a primary sheave (20) rotatably coupled to a secondary sheave (30) via an endless belt (40), wherein the primary sheave (20) comprises a fixed flange (22) and a moving flange (24) defining a belt groove therebetween for accommodating the endless belt (40);
a control unit (10);
an actuator (60) connected to the control unit (10) and adapted to adjust the groove width of the primary sheave (20) by controlling the movement of the moving flange (24) of the primary sheave (20); and
a sheave-position sensor (27) connected to the control unit (10) and adapted to sense the position of the moving flange (24) of the primary sheave (20); **characterized in that**
the control unit (10) is adapted to control the power output of the actuator (60) in such a manner as to change the power output of the actuator (60) for moving the flange (24) according to the moving flange position sensed by the sheave-position sensor (27).

2. The continuously variable transmission (100) according to Claim 1, wherein the output of the actuator (60) is larger in Low than in Top.

3. The continuously variable transmission (100) according to Claim 1 or 2, wherein the output of the actuator (60) increases when the groove width between the fixed (22) and moving (24) sheaves of the primary sheave (20) increases.

4. The continuously variable transmission (100) according to any of the preceding Claims, wherein the output of the actuator (80) is largest when the groove width between the fixed (22) and moving (24) sheaves of the primary sheave (20) is largest.

5. The continuously variable transmission (100) according to any of the preceding Claims, wherein
the control unit (10) is connected to a storage unit (13), wherein
the storage unit (13) stores specified relative moduli corresponding to the moving flange positions of the primary sheave (20); and
the output of the actuator (60) is controlled according to an actuator manipulation amount calculated by multiplying a command value to the actuator (60) by the relative modulus.

6. The continuously variable transmission (100) according to any of the preceding Claims, wherein
than actuator (60) comprises an electric motor; and
the output of the electric motor is controlled by the electric power supplied to the electric motor.

7. The continuously variable transmission (100) according to any preceding Claim, wherein the electric power supplied to the electric motor is controlled by the duty ratio of the pulse signal output from the control unit (10).

8. The continuously variable transmission (100) according to any preceding Claim, wherein the secondary sheave (30) comprises a fixed flange (32) and a moving flange (34) defining a belt groove therebetween for accommodating the endless belt (40), and the moving flange (34) of the secondary sheave (30) is blased in a direction to narrow the groove width.

9. The continuously variable transmission (100) according to claim 1, wherein the control unit (10) is adapted to control the output of the actuator (60) to be different for upshifting and downshifting of the continuously variable transmission (100).

10. The continuously variable transmission (100) according to Claim 9, wherein the output of the actuator (60) is larger for upshifting than for downshifting.

11. The continuously variable transmission (100) according to claim 1, wherein:
the transmission (100) is electronically controlled by the control unit (10);
the continuously variable transmission (100) is a belt type continuously variable transmission, wherein the primary sheave (20) and a secondary sheave (30) each have a V-groove and the belt (40) is wound around the V-grooves of the sheaves (20, 30), wherein the groove widths of the sheaves (20, 30) are variable 30 as to control the speed change ratio steplessly, wherein
the secondary sheave (30) comprises a fixed flange (32) and a moving flange (34) mounted on a rotation shaft (35);
the moving flange (34) of the secondary sheave (30) is blased in the direction to narrow the groove width; and
the control unit (10) controls the output of the actuator (60) in such a manner as to change the output of the actuator (60) between for upshift and downshift of the continuously variable transmission (100).

12. The continuously variable transmission (100) according to claim 1, wherein:
the transmission (100) is electronically controlled by tha control unit (10);
the continuously variable transmission (100) is a belt type continuously variable transmission, wherein the primary sheave (20) and a secondary sheave (30) each have a V-groove and a belt (40) wound around the V-grooves of the sheaves (20, 30), wherein the groove widths of the sheaves (20, 30) are variable so as to control the speed change ratio steplessly, wherein
the secondary sheave (30) comprises a fixed flange (32) and a moving flange (34) each mounted on a rotation shaft (35); and
the moving flange (34) of the secondary sheave (30) is blased in the direction to narrow the groove width.

13. A straddle-type vehicle (1000) incorporating a continuously variable transmission (100) according to any one of Claims 1 to 12.

## Patentansprüche

1. Kontinuierlich veränderliches Getriebe (100), das Folgendes umfasst:
eine Primärscheibe (20), die über einen Endlosriemen (40) drehbar an eine Sekundärscheibe (30) gekoppelt ist, wobei die Primärscheibe (20) einen unbeweglichen Flansch (22) und einen beweglichen Flansch (24) umfasst, die eine Riemenrille zwischen denselben definieren, um den Endlosriemen (40) aufzunehmen,
eine Steuerungseinheit (10),
ein Stellelement (60), das mit der Steuerungseinheit (10) verbunden und dafür eingerichtet ist, die Rillenbreite der Primärscheibe (20) durch das Steuern der Bewegung des beweglichen Flansches (24) der Primärscheibe (20) einzustellen, und
einen Scheibenstellungssensor (27), der mit der Steuerungseinheit (10) verbunden und dafür eingerichtet ist, die Stellung des beweglichen Flansches (24) der Primärscheibe (20) abzufühlen, **dadurch gekennzeichnet, dass**
die Steuerungseinheit (10) dafür eingerichtet ist, die Leistungsabgabe des Stellelementes (60) auf eine solche Weise zu steuern, dass die Leistungsabgabe des Stellelementes (60) verändert wird, um den Flansch (24) entsprechend der durch den Scheibenstellungssensor (27) abgefühlten Stellung des beweglichen Flansches zu bewegen.

2. Kontinuierlich veränderliches Getriebe (100) nach Anspruch 1, wobei die Leistung des Stellelementes (60) im niedrigsten Gang größer ist als im höchsten Gang.

3. Kontinuierlich veränderliches Getriebe (100) nach Anspruch 1 oder 2, wobei die Leistung des Stellelementes (60) zunimmt, wenn die Rillenbreite zwischen der unbeweglichen (22) und der beweglichen Scheibe (24) der Primärscheibe (20) zunimmt.

4. Kontinuierlich veränderliches Getriebe (100) nach einem der vorhergehenden Ansprüche, wobei die Leistung des Stellelementes (60) am größten ist, wenn die Rillenbreite zwischen der unbeweglichen (22) und der beweglichen Scheibe (24) der Primärscheibe (20) am größten ist.

5. Kontinuierlich veränderliches Getriebe (100) nach einem der vorhergehenden Ansprüche, wobei
die Steuerungseinheit (10) mit einer Speicherungseinheit (13) verbunden ist, wobei
die Speicherungseinheit (13) spezifische relative Module speichert, die den Stellungen des beweglichen Flansches der Primärscheibe (20) entsprechen, und
die Leistung des Stellelementes (60) entsprechend einem Stellelement-Manipulationsmaß gesteuert wird, das berechnet wird durch das Multiplizieren eines Kommandowertes an das Stellelement (60) mit dem relativen Modul.

6. Kontinuierlich veränderliches Getriebe (100) nach einem der vorhergehenden Ansprüche, wobei
das Stellelement (60) einen Elektromotor umfasst und
die Leistung des Elektromotors durch die dem Elektromotor zugeführte Elektroenergie gesteuert wird.

7. Kontinuierlich veränderliches Getriebe (100) nach einem der vorhergehenden Ansprüche, wobei die dem Elektromotor zugeführte Elektroenergie durch das Tastverhältnis der Impulssignalausgabe von der Steuerungseinheit (10) gesteuert wird.

8. Kontinuierlich veränderliches Getriebe (100) nach einem der vorhergehenden Ansprüche, wobei die Sekundärscheibe (30) einen unbeweglichen Flansch (32) und einen beweglichen Flansch (34) umfasst, die zwischen denselben eine Riemenrille definieren, um den Endlosriemen (40) aufzunehmen, und der bewegliche Flansch (34) der Sekundärscheibe (30) zu einer Richtung hin vorgespannt wird, um die Rillenbreite zu verengen.

9. Kontinuierlich veränderliches Getriebe (100) nach Anspruch 1, wobei die Steuerungseinheit (10) dafür eingerichtet ist, die Leistung des Stellelementes (60) so zu steuern, dass sie für das Hochschalten und das Herunterschalten des kontinuierlich veränderlichen Getriebes (100) unterschiedlich ist.

10. Kontinuierlich veränderliches Getriebe (100) nach Anspruch 9, wobei die Leistung des Stellelementes (60) für das Hochschalten größer ist als für das Herunterschalten.

11. Kontinuierlich veränderliches Getriebe (100) nach Anspruch 1, wobei:
das Getriebe (100) elektronisch durch die Steuerungseinheit (10) gesteuert wird,
das kontinuierlich veränderliche Getriebe (100) ein kontinuierlich veränderliches Riemengetriebe ist, wobei die Primärscheibe (20) und die Sekundärscheibe (30) jeweils eine V-Rille haben und der Riemen (40) um die V-Rillen der Scheiben (20, 30) gewunden ist, wobei die Rillenbreiten der Scheiben (20, 30) veränderlich sind, um stufenlos das Übersetzungsverhältnis zu steuern, wobei
die Sekundärscheibe (30) einen unbeweglichen Flansch (32) und einen beweglichen Flansch (34) umfasst, die an einer Drehwelle (35) befestigt sind,
der bewegliche Flansch (34) der Sekundärscheibe (30) in der Richtung vorgespannt wird, um die Rillenbreite zu verengen, und
die Steuerungseinheit (10) die Leistung des Stellelementes (60) auf eine solche Weise steuert, dass die Leistung des Stellelementes (60) geändert wird zwischen derjenigen für das Hochschalten und das Herunterschalten des kontinuierlich veränderlichen Getriebes (100).

12. Kontinuierlich veränderliches Getriebe (100) nach Anspruch 1, wobei:
das Getriebe (100) elektronisch durch die Steuerungseinheit (10) gesteuert wird,
das kontinuierlich veränderliche Getriebe (100) ein kontinuierlich veränderliches Riemengetriebe ist, wobei die Primärscheibe (20) und die Sekundärscheibe (30) jeweils eine V-Rille haben und der Riemen (40) um die V-Rillen der Scheiben (20, 30) gewunden ist, wobei die Rillenbreiten der Scheiben (20, 30) veränderlich sind, um stufenlos das Übersetzungsverhältnis zu steuern, wobei
die Sekundärscheibe (30) einen unbeweglichen Flansch (32) und einen beweglichen Flansch (34) umfasst, die an einer Drehwelle (35) befestigt sind,
der bewegliche Flansch (34) der Sekundärscheibe (30) in der Richtung vorgespannt wird, um die Rillenbreite zu verengen.

13. Reitsitz-Fahrzeug (1000), das ein kontinuierlich veränderliches Getriebe (100) nach einem der Ansprüche 1 bis 12 einschließt.

## Revendications

1. Transmission à variation continue (100), comprenant :
une poulie primaire (20), accouplée de manière rotative à une poulie secondaire (30) par l'intermédiaire d'une courroie sans fin (40), la poulie primaire (20) comprenant une bride fixe (22) et une bride mobile (24), définissant une rainure de courroie entre elles pour recevoir la courroie sans fin (40) ;
une unité de commande (10) ;
un actionneur (60), connecté à l'unité de commande (10) et adapté pour ajuster la largeur de rainure de la poulie primaire (20) en contrôlant le déplacement de la bride mobile (24) de la poulie primaire (20) ; et
un capteur de la position de la poulie (27), connecté à l'unité de commande (10) et adapté pour détecter la position de la bride mobile (24) de la poulie primaire (20) ; **caractérisée en ce que**
l'unité de commande (10) est adaptée pour contrôler la puissance de sortie de l'actionneur (60), de sorte à changer la puissance de sortie de l'actionneur (60) pour déplacer la bride (24) en fonction de la position de la bride mobile détectée par le capteur de la position de la poulie (27).

2. Transmission à variation continue (100) selon la revendication 1, dans laquelle la puissance de sortie de l'actionneur (60) est plus grande dans un rapport bas que dans un rapport élevé.

3. Transmission à variation continue (100) selon les revendications 1 ou 2, dans laquelle la puissance de sortie de l'actionneur (60) est accrue lors d'un accroissement de la largeur de rainure entre les poulies fixe (22) et mobile (24) de la poulie primaire (20).

4. Transmission à variation continue (100) selon l'une quelconque des revendications précédentes, dans laquelle la puissance de sortie de l'actionneur (60) correspond à une valeur maximale lorsque la largeur de rainure entre les poulies fixe (22) et mobile (24) de la poulie primaire (20) correspond à une valeur maximale.

5. Transmission à variation continue (100) selon l'une quelconque des revendications précédentes, dans laquelle :
l'unité de commande (10) est connectée à une unité de stockage (13) ;
l'unité de stockage (13) stocke des modules relatifs spécifiques correspondant aux positions de la bride mobile de la poulie primaire (20) ; et
la puissance de sortie de l'actionneur (60) est contrôlée en fonction d'une valeur de manipulation de l'actionneur, calculée en multipliant une valeur de commande de l'actionneur (60) par le module relatif.

6. Transmission à variation continue (100) selon l'une quelconque des revendications précédentes, dans laquelle :
l'actionneur (60) comprend un moteur électrique ; et
la puissance de sortie du moteur électrique est contrôlée par l'alimentation en énergie électrique du moteur électrique.

7. Transmission à variation continue (100) selon l'une quelconque des revendications précédentes, dans laquelle l'alimentation en énergie électrique du moteur électrique est contrôlée par le rapport cyclique du signal d'impulsion émis par l'unité de commande (10).

8. Transmission à variation continue (100) selon l'une quelconque des revendications précédentes, dans laquelle la poulie secondaire (30) comprend une bride fixe (32) et une bride mobile (34), définissant une rainure de courroie entre elles pour recevoir la courroie sans fin (40), la bride mobile (34) de la poulie secondaire (30) étant poussée dans une direction destinée à rétrécir la largeur de rainure.

9. Transmission à variation continue (100) selon la revendication 1, dans laquelle l'unité de commande (10) est adaptée pour contrôler la puissance de sortie de l'actionneur (60), de sorte à être différente pour le passage à une vitesse supérieure et le passage à une vitesse inférieure de la transmission à variation continue (100).

10. Transmission à variation continue (100) selon la revendication 9, dans laquelle la puissance de sortie de l'actionneur (60) est plus grande pour le passage à une vitesse supérieure que pour le passage à une vitesse inférieure.

11. Transmission à variation continue (100) selon la revendication 1, dans laquelle :
la transmission (100) est contrôlée de manière électronique par l'unité de commande (10) ;
la transmission à variation continue (100) est une transmission à variation continue du type à courroie, dans laquelle la poulie primaire (20) et la poulie secondaire (30) comportent chacune une rainure en V, la courroie (40) étant enroulée autour des rainures en V des poulies (20, 30), les largeurs de rainure des poulies (20, 30) étant variables, de sorte à contrôler le rapport de changement de vitesse de manière continue ; dans laquelle
la poulie secondaire (30) comprend une bride fixe (32) et une bride mobile (34) montées sur un arbre de rotation (35) ;
la bride mobile (34) de la poulie secondaire (30) est poussée dans la direction destinée à rétrécir la largeur de rainure ; et
l'unité de commande (10) contrôle la puissance de sortie de l'actionneur (60) de sorte à changer la puissance de sortie de l'actionneur (60) pour le passage à une vitesse supérieure et le passage à une vitesse inférieure de la transmission à variation continue (100).

12. Transmission à variation continue (100) selon la revendication 1, dans laquelle :
la transmission (100) est contrôlée de manière électronique par l'unité de commande (10) ;
la transmission à variation continue (100) est une transmission à variation continue du type à courroie, dans laquelle la poulie primaire (20) et une poulie secondaire (30) comportent chacune une rainure en V et une courroie (40) enroulée autour de rainures en V des poulies (20, 30), les largeurs de rainure des poulies (20, 30) étant variables, de sorte à contrôler le rapport de changement de vitesse de manière continue ;
la poulie secondaire (30) comprend une bride fixe (32) et une bride mobile (34), montées chacune sur un arbre de rotation (35) ; et
la bride mobile (34) de la poulie secondaire (30) est poussée dans la direction destinée à rétrécir la largeur de rainure.

13. Véhicule du type à enfourcher (1000), incorporant une transmission à variation continue (100) selon l'une quelconque des revendications 1 à 12.
